# EUROPEAN PATENT SPECIFICATION

(11) **EP 2 783 964 B1**
(45) Date of publication and mention of the grant of the patent: **17.05.2017**
(21) Application number: 14161332.3
(22) Date of filing: 24.03.2014
(51) Int. Cl.: B62K 5/007

(54) **Transmission**
Übertragung
Transmission

(30) Priority: 29.03.2013 JP 2013071756
(43) Date of publication of application: 01.10.2014
(73) Proprietor: Honda Motor Co., Ltd., Minato-ku Tokyo 107-8556 (JP)
(72) Inventor: Nakashima, Masahiro, SAITAMA, Saitama 351-0193 (JP); Takeuchi, Kazuhiro, SAITAMA, Saitama 351-0193 (JP); Tsukamoto, Tomohiro, SAITAMA, Saitama 351-0193 (JP)
(74) Representative: Quinterno, Giuseppe

(56) References cited:
- US-A- 5 992 254
- US-A1- 2004 025 618
- US-A1- 2008 257 630
- US-A1- 2010 218 634

## Description

The present invention relates to a transmission of the kind defined in the preamble of claim 1.A transmission of that kind, comprising a main shaft, a countershaft parallel to the main shaft and a slide shaft capable of selectively engaging with one of a plurality of driven gears is disclosed in the prior art document US 2004/025618 A1.

Japanese Patent Application Publication No. 2004-001618 discloses a transmission in which one of gear trains for different transmission gear ratios provided between a main shaft and a countershaft is selectively established in such a way that a slide shaft non-rotatable relative to the countershaft is axially driven and thereby engaged with one of driven gears always meshed with plural drive gears.

An object of the present invention is to provide a transmission in which a slide shaft can be driven with a compact and easy-to-install structure.

This object is achieved according to a main aspect of the invention by a transmission having the features defined in claim 1.

A second aspect of the present invention provides the transmission of the second aspect, further including: a first sensor configured to sense a rotary position of the shift arm; and a second sensor configured to sense a rotary position of the shift drum.

A third aspect of the present invention provides the transmission of the second aspect, wherein the drive source is a drive motor housed in and fixed to a motor chamber formed adjacent to the power transmission chamber within the case, and the main shaft and a plurality of shafts of a gear shift actuator configured to turn the shift drum are disposed at positions overlapping the drive motor when seen in a direction along an axis of the drive motor.

According to the main aspect of the present invention, since the shaft driving member is disposed to coaxially surround the slide shaft, a space for disposing the shaft driving member does not need to be ensured at the side of the end portion of the slide shaft. Further, since the installation directions of the slide shaft and the shaft driving member are the same, the slide shaft can be driven with a compact and easy-to-install structure. Moreover, according to the main aspect of the present invention, the shift drum can be turned using a shift drum driving mechanism similar to conventional ones such that the swing of the shift arm is transmitted to the shaft driving member through the transmission drive gear and the transmission driven gear meshed with each other.

Furthermore, according to the main aspect of the present invention, the power transmission chamber and the gear shifting chamber are formed within the case.

Finally, according to the main aspect of the present invention, the closed-bottom fitting hole into which the end portion of the slide shaft on the gear shifting chamber side is slidably fitted is formed in the part of the cylindrical protruding portion which extends from the case toward the drive wheel and supports part of the braking device disposed in a wheel of the drive wheel to be capable of braking the drive wheel. Thus, it is unnecessary to provide a portion for supporting the end portion of the slide shaft on the gear shifting chamber side separately from the protruding portion, and the case can be made compact.

Moreover, the present invention, the guide pin provided in the slide shaft to protrude from the slide shaft is fitted into the guide hole provided in the shift drum as the shaft driving member, and the slide shaft is axially displaced along with the turning of the shift drum. Accordingly, the slide shaft can be reliably axially driven, and a space for disposing the shift drum does not need to be ensured other than those for the main shaft and the countershaft. Thus, the main shaft, the countershaft, and the shift drum can be disposed together into a compact arrangement. And also the present invention the shaft driving member is disposed to extend from the power transmission chamber to the gear shifting chamber.

According to the second aspect of the present invention, the gear shift actuator swingably drives the shift arm in response to a gear shifting operation by an operator, and automatic gear shifting can be performed such that the start of a gear shifting operation and the completion of the operation are respectively sensed by the first and second sensors.

According to the third aspect of the present invention, the main shaft and the plural shafts of the gear shift actuator are at positions overlapping the drive motor as a drive source when seen in the direction along the axis of the drive motor. Accordingly, the drive motor, the main shaft, and the gear shift actuator can be disposed in a compact arrangement. Further features and advantages of the present invention will become apparent from the following description with reference to the annexed drawings wherein:
Fig. 1 is a side view of a swing-type compact three-wheeled vehicle;
Fig. 2 is an enlarged view of a principal part of Fig. 1;
Fig. 3 is a cross-sectional view taken along line 3-3 of Fig. 2;
Fig. 4 is an enlarged view of a principal part of Fig. 3;
Fig. 5 is a cross-sectional view taken along line 5-5 of Fig. 4;
Fig. 6 is an enlarged view of a portion of Fig. 4 indicated by arrow 6;
Fig. 7 is a development of an outer periphery of a shift drum;
Fig. 8 is a cross-sectional view taken along line 8-8 of Fig. 4;
Fig. 9 is a block diagram showing a configuration for controlling the operation of a gear shifting electric motor; and
Fig. 10 is a timing diagram showing the state of control during automatic gear shifting.

Embodiments of the present invention will be described with reference to the accompanying drawings. It should be noted that in the description below, forward, backward, right, left, upward, and downward directions are directions as seen from an operator riding on a swing-type compact three-wheeled vehicle.

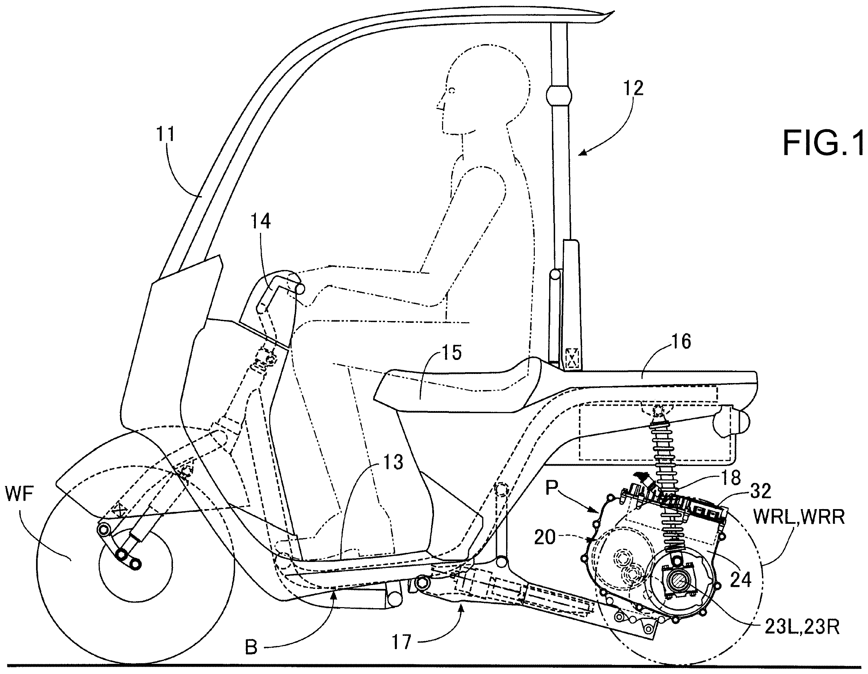

First, referring to Fig. 1, in a central portion of a body B of a swing-type compact three-wheeled vehicle, a roofed cabin 12 having a windscreen 11 in a front thereof is formed with a bottom surface thereof serving as a low platform 13. A steering handle 14 is movably supported on a front wall of the cabin 12 so that steering can be performed. A riding seat 15 which allows a vehicle operator to sit thereon is provided on the body B to be disposed behind the steering handle 14 in the cabin 12. Moreover, a single front wheel WF which is steered by the steering handle 14 is suspended in a front portion of the body B, and a luggage rack 16 is provided on a rear portion of the body B.

A power unit P for driving a left rear wheel WRL and a right rear wheel WRR as a pair of left and right drive wheels is disposed under the luggage rack 16. The power unit P is coupled to the body B through a swingable coupling mechanism 17 to be swingable from side to side with respect to the body B. Moreover, the power unit P is disposed between the left rear wheel WRL and the right rear wheel WRR, and a pair of left and right cushion units 18 ... are provided between a rear portion of the body B and the power unit P.

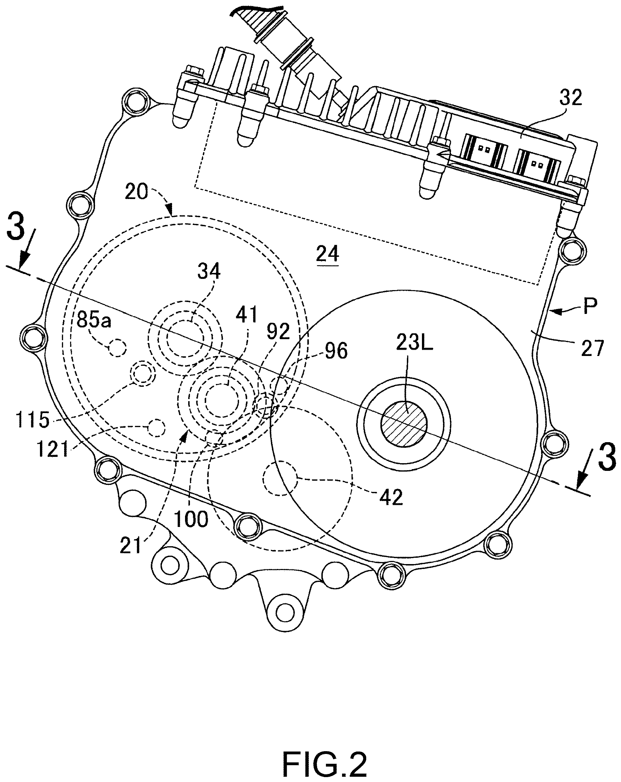

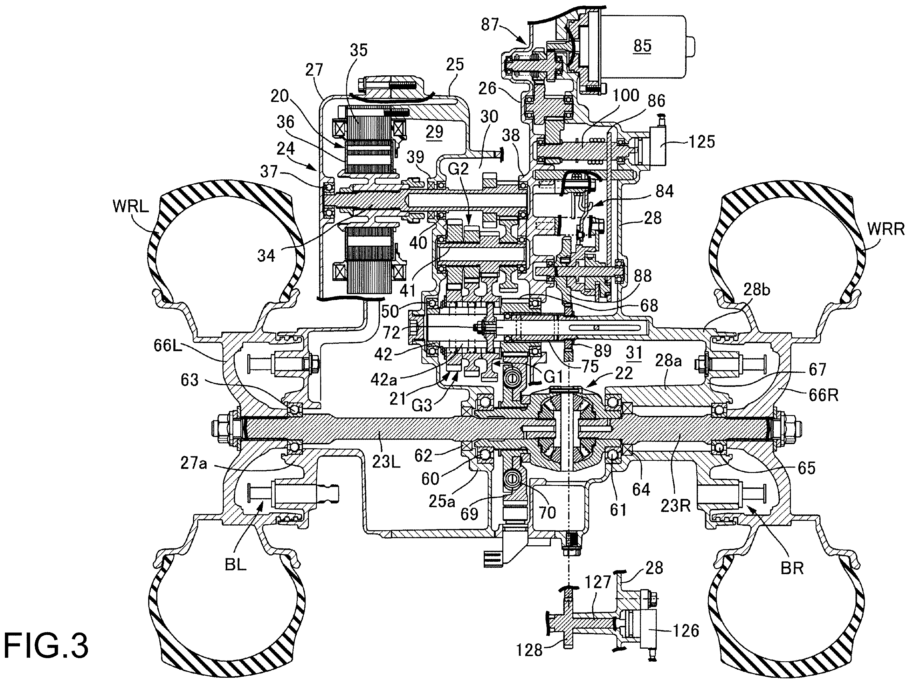

Referring to Figs. 2 and 3 in combination, the power unit P includes an electric motor 20 as a drive source capable of being controlled to rotate in any of the forward and reverse directions, a transmission 21 for changing the output speed of the drive motor 20, and a differential gear mechanism 22 provided between left and right axles 23L and 23R respectively connected to the left rear wheel WRL and the right rear wheel WRR.

A case 24 of the power unit P includes a left cover member 27 and a first case member 25 joined to each other to form a motor chamber 29 therebetween, a second case member 26 joined to the first case member 25 from an opposite side from the left cover member 27 to form a power transmission chamber 30 with the first case member 25, and a right cover member 28 joined to the second case member 26 from the right side to form a gear shifting chamber 31 with the second case member 26. A power drive unit 32 is disposed on an upper portion of the case 24.

The motor chamber 29 houses the drive motor 20 having a motor shaft 34 parallel to the two axles 23L and 23R. This drive motor 20 is configured by disposing a rotor 36 in a stator 35 fixed to the first case member 25. The motor shaft 34 having one end portion thereof rotatably supported on the left cover member 27 through a ball bearing 37 is passed through and fixed to the rotor 36. Other end portion of the motor shaft 34 rotatably passed through the first case member 25 is rotatably supported on the second case member 26 through a ball bearing 38. Moreover, a ring-shaped seal member 39 and a ball bearing 40 are set between the first case member 25 and the motor shaft 34 in order from the motor chamber 29 side.

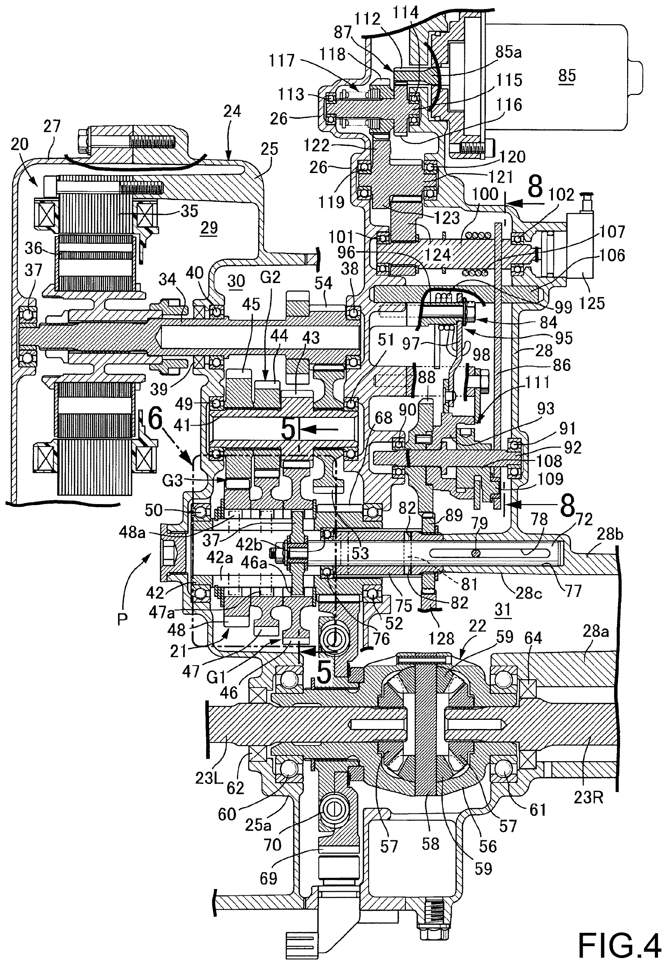

Referring also to Fig. 4, the transmission 21 includes a main shaft 41 linked and coupled to the motor shaft 34, drive gears 43, 44, and 45 each provided on the main shaft 41 in a relatively non-rotatable manner, a countershaft 42 formed in a cylindrical shape to have an axis parallel to the main shaft 41, driven gears 46, 47, and 48 each movably supported on the countershaft 42 in a relatively non-rotatable manner and respectively meshed with the drive gears 43 to 45. In this embodiment, a first-speed drive gear 43, a second-speed drive gear 44, and a third-speed drive gear 45 are each provided on the main shaft 41 in a relatively non-rotatable manner; and the first-speed driven gear 46, the second-speed driven gear 47 and the third-speed driven gear 48 are each supported on the countershaft 42 in a relatively rotatable manner, the first-speed driven gear 46 meshed with the first-speed drive gear 43 to constitute a first-speed gear train G1 together with the first-speed drive gear 43, the second-speed driven gear 47 meshed with the second-speed drive gear 44 to constitute a second-speed gear train G2 together with the second-speed drive gear 44, and the third-speed driven gear 48 meshed with the third-speed drive gear 45 to constitute a third-speed gear train G3 together with the third-speed drive gear 45. Further, the first-to third-speed drive gears 43 to 45 and the first- to third-speed driven gears 46 to 48 are housed in the power transmission chamber 30.

Both end portions of the main shaft 41 and the countershaft 42 are rotatably supported on the first and second case members 25 and 26 through ball bearings 49, and 50; and 51, and 52. A primary reduction drive gear 54 formed integrally with the motor shaft 34 is meshed with a primary reduction driven gear 53 fixed to an end portion of the main shaft 41 on the second case member 26 side. The rotational power of the motor shaft 34 is transmitted to the main shaft 41 through the drive gear 54 and the driven gear 53.

The differential gear mechanism 22 is housed in the gear shifting chamber 31, and includes a differential carrier 56, a pair of side gears 57 and 57 respectively coupled to the left and right axles 23L and 23R in a relatively non-rotatable manner and housed in the differential carrier 56, a pinion shaft 58 having an axis perpendicular to the axes of the left axle 23L and the right axle 23R and having both end portions supported by the differential carrier 56, and a pair of pinions 59 and 59 meshed with the two side gears 57 and 57 to be fixed to the pinion shaft 58 and housed in the differential carrier 56.

A left end portion of the differential carrier 56 is rotatably supported through a ball bearing 60 by a bearing housing 25a provided integrally with the first case member 25 of the case 24, and a right end portion of the differential carrier 56 is rotatably supported through a ball bearing 61 by an inner end portion of a cylindrical axle case 28a provided in the right cover member 28. The left axle 23L having an inner end portion supported by the left end portion of the differential carrier 56 in a relatively rotatable manner is rotatably passed through the bearing housing 25a of the first case member 25 and a bearing housing 27a provided in the left cover member 27. The left axle 23L has an outer end portion coupled to a wheel 66L of the left rear wheel WRL. A ring-shaped seal member 62 is set between the bearing housing 25a and the left axle 23L, and a ball bearing 63 is set between the bearing housing 27a and the left axle 23L.

Moreover, the right axle 23R having an inner end portion supported by the right end portion of the differential carrier 56 in a relatively rotatable manner is passed through the axle case 28a of the right cover member 28, and a wheel 66R of the right rear wheel WRR is coupled to an outer end portion of the right axle 23R. Further, a ring-shaped seal member 64 and a ball bearing 65 are set between the right axle 23R and the axle case 28a so that the seal member 64 may be disposed at a position near and more external than the ball bearing 61 set between the right end portion of the differential carrier 56 and the inner end portion of the axle case 28a.

Referring to Fig. 3, a drum brake BL for braking the left rear wheel WRL is disposed in a wheel 66L of the left rear wheel WRL. Moreover, a drum brake BR as a braking device for braking the right rear wheel WRR is disposed in a wheel 66R of the right rear wheel WRR. To support a brake panel 67 constituting part of the drum brake BR, the right cover member 28 is integrally provided with a protruding portion 28b protruding outwardly from the axle case 28a toward the right rear wheel WRR side. A tip portion of the protruding portion 28b is integrally provided on an outer periphery of the brake panel 67.

The rotational power of the countershaft 42 is transmitted to the differential carrier 56 of the differential gear mechanism 22 through a transmission drive gear 68 formed integrally with the countershaft 42 within the power transmission chamber 30, a transmission driven gear 69 disposed coaxially with the differential carrier 56 to be meshed with the transmission drive gear 68, and a damper spring 70 set between the transmission driven gear 69 and the differential carrier 56.

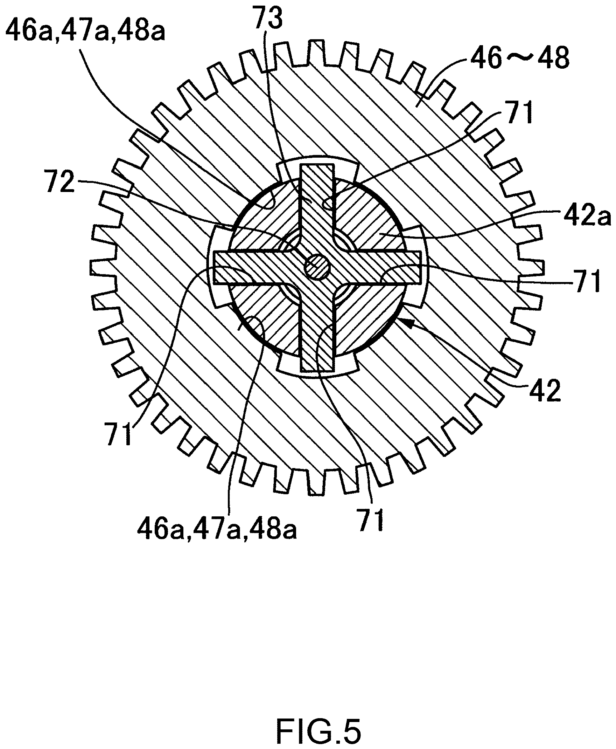

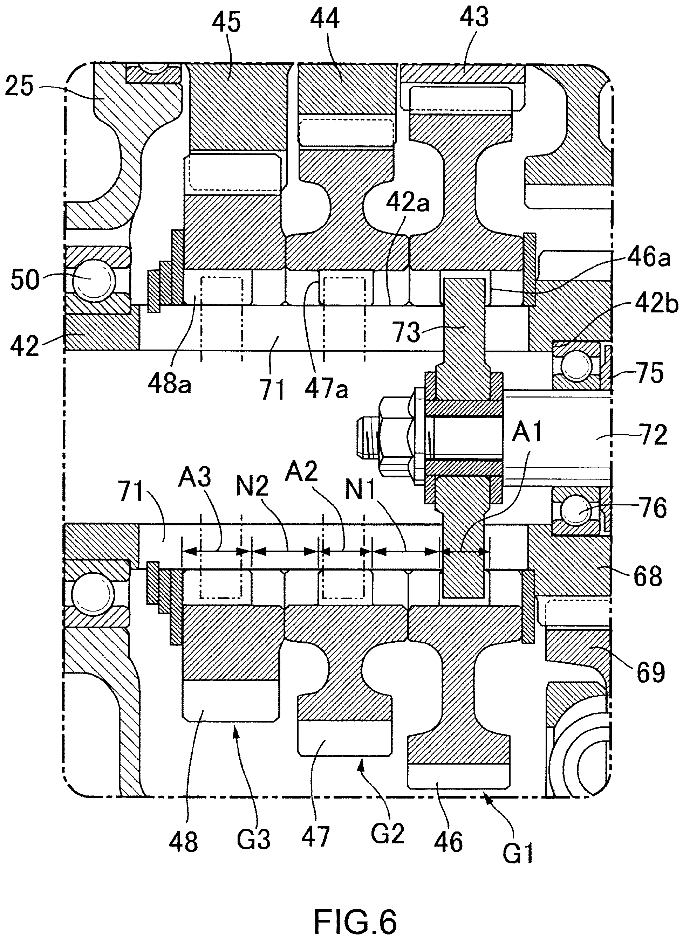

Referring to Figs. 5 and 6 in combination, a portion of the cylindrical countershaft 42 which is disposed between the transmission drive gear 68 and the ball bearing 50 set between one end portion of the countershaft 42 and the first case member 25 serves as a gear supporting portion 42a for supporting the first- to third-speed driven gears 46 to 48 in a relatively rotatable manner. Axially extending slits 71, 71 ... are provided at four circumferentially equally spaced positions in the gear supporting portion 2a. On the other hand, a slide shaft 72 coaxial with the countershaft 42 is axially movably inserted in the gear supporting portion 42a. In the gear supporting portion 42a, a cruciform pawl 73 as an engaging portion is fixed to an end portion of the slide shaft 72 to be inserted in the slits 71, 71 ....

On the other hand, four locking portions 46a ..., 47a ..., or 48a ... capable of engaging with the pawl 73 are provided on an inner periphery of each of the first- to third-speed driven gears 46 to 48 at equal intervals in the circumferential direction to be capable of engaging with the pawl 73. In other words, the slide shaft 72 capable of selectively engaging with one of the first- to third-speed driven gears 46 to 48 is axially movably inserted in the gear supporting portion 42a in a manner non-rotatable relative to the countershaft 42.

The locking portions 46a ... of the first-speed driven gear 46 are provided on the inner periphery of the first-speed driven gear 46, at positions spaced axially inward from a sliding contact portion between the first- and second-speed driven gears 46 and 47. The locking portions 47a ... of the second-speed driven gear 47 are provided on the inner periphery of the second-speed driven gear 47, at positions spaced axially inward from both of a sliding contact portion between the first- and second-speed driven gears 46 and 47 and a sliding contact portion between the second- and third-speed driven gears 47 and 48. The locking portions 48a ... of the third-speed driven gear 48 are provided on the inner periphery of the third-speed driven gear 48, at positions spaced axially inward from a sliding contact portion between the second- and third-speed driven gears 47 and 48. The axial width of the pawl 73 approximately corresponds to the axial widths of the locking portions 46a ..., 47a ..., and 48a .... Accordingly, the axial travel range of the slide shaft 72 has first, second, and third transmission regions A1, A2, and A3 in each of which the engaging portion 73 is selectively engaged with the corresponding set of the locking portions 46a ..., 47a ..., or 48a ..., and first and second neutral regions N1 and N2 set between the first, second, and third transmission regions A1, A2, and A3 so that the engaging portion 73 may not be engaged with either of the locking portions 46a ..., 47a ..., or 48a ....

Referring again to Fig. 4, a cylindrical shift drum 75 as a shaft driving member for driving the slide shaft 72 is disposed to extend from the power transmission chamber 30 to the gear shifting chamber 31 and to coaxially surround the slide shaft 72.

One end portion of the shift drum 75 is inserted in the countershaft 42, and is in contact with an inner ring of a ball bearing 76 fitted into the countershaft 42 such that the ball bearing 76 is prevented from moving toward the gear supporting portion 42a side by bringing an outer ring of the ball bearing 76 into contact with an annular step portion 42b provided on an inner periphery of the countershaft 42. Other end portion of the shift drum 75 protrudes from the countershaft 42 to the gear shifting chamber 31. Moreover, an inner periphery of the inner ring of the ball bearing 76 is in contact with an outer periphery of the slide shaft 72 to allow the axial movement of the slide shaft 72.

A cylindrical restricting projection 28c having a tip portion thereof in sliding contact with other end portion of the shift drum 75 is provided integrally with the right cover member 28 in a portion corresponding to the protruding portion 28b. Moreover, an end portion of the slide shaft 72 which protrudes on the gear shifting chamber 31 side from the other end portion of the shift drum 75 is slidably fitted into a closed-bottom fitting hole 77 formed to extend from the restricting projection 28c to part of the protruding portion 28b. A pin 79 which is inserted through and fixed to the restricting projection 28c is fitted into an axially extending long opening 78 provided in the slide shaft 72 within the fitting hole 77.

A guide pin 81 protruding from the slide shaft 72 in a direction perpendicular to the axis of the countershaft 42 is provided in the slide shaft 72. The shift drum 75 has guide holes 82 and 82 into which two end portions of the guide pin 81 are fitted to axially displace the slide shaft 72 in response to the turning of the shift drum 75 about the axis thereof.

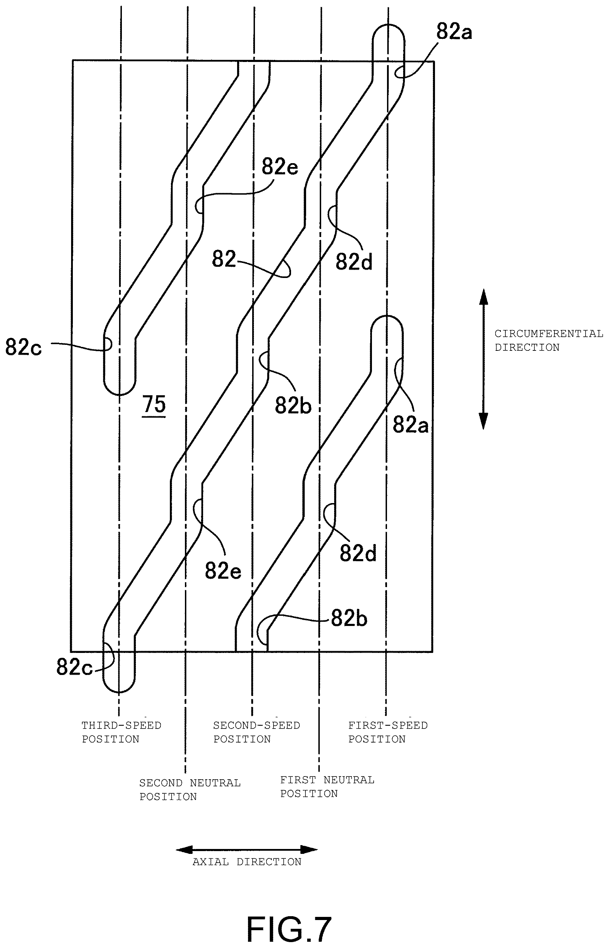

Referring to Fig. 7, in the shift drum 75, the pair of guide holes 82 and 82, into which two end portions of the guide pin 81 are fitted, are formed symmetrically about the axis of the shift drum 75.

In the shift drum 75, first- to third-speed positions and first and second neutral positions are set to be spaced from each other in the axial direction of the shift drum 75. The first-speed position is set so that the pawl 73 of the slide shaft 72 may be placed at the center of the first transmission region A1 to be engaged with the locking portions 46a ... of the first-speed driven gear 46. The second-speed position is set so that the pawl 73 of the slide shaft 72 may be placed at the center of the second transmission region A2 to be engaged with the locking portions 47a ... of the second-speed driven gear 47. The third-speed position is set so that the pawl 73 of the slide shaft 72 may be placed at the center of the third transmission region A3 to be engaged with the locking portions 48a ... of the third-speed driven gear 48. The first neutral position between the first- and second-speed positions and the second neutral position between the second- and third-speed positions are set so that the pawl 73 of the slide shaft 72 may be placed at the centers of the first and second neutral regions N1 and N2, respectively.

Each of the guide hole 82 has a first-speed gear train establishing portion 82a extending at the first-speed position in the circumferential direction of the shift drum 75, a second-speed gear train establishing portion 82b extending at the second-speed position in the circumferential direction of the shift drum 75, a third-speed gear train establishing portion 82c extending at the third-speed position in the circumferential direction of the shift drum 75, a first neutral portion 82d extending at the first neutral position in the circumferential direction of the shift drum 75, and a second neutral portion 82e extending at the second neutral position in the circumferential direction of the shift drum 75.

The shift drum 75 is turnably driven by a gear shift actuator 84. The gear shift actuator 84 includes a shift motor 85 as a gear shifting drive motor, a shift arm 86 which swings in response to the operation of the gear shifting drive motor 85, a reduction gear mechanism 87 provided between the shift motor 85 and the shift arm 86, a transmission drive gear 88 which turns in response to the swing of the shift arm 86, and a transmission driven gear 89 provided integrally with the outer periphery of the other end portion of the shift drum 75 to be meshed with the transmission drive gear 88.

The transmission drive gear 88 is fixed to a rotating shaft 92 having two end portions thereof rotatably supported by the second case member 26 and the right cover member 28 through ball bearings 90 and 91. A turning member 93 is fixed to the transmission drive gear 88. Moreover, the transmission drive gear 88 has a larger diameter than the transmission driven gear 89 so that the rotational power of the rotating shaft 92 may be transmitted to the shift drum 75 in a speed-increasing manner.

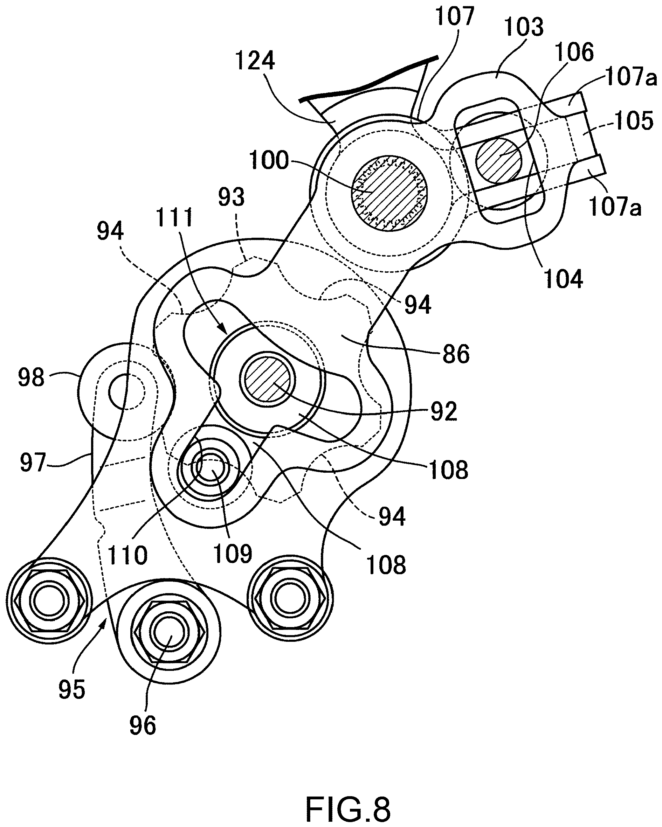

Referring also to Fig. 8, on the outer periphery of the turning member 93, positioning notches 94, 94 ... corresponding to the first- to third-speed positions and the first and second neutral positions set in the shift drum 75 are provided separately from each other.

There is a drum stopper arm 95 which is selectively engaged with one of the notches 94, 94 .... The drum stopper arm 95 includes an arm 97 having a base end portion thereof pivotally supported by a support shaft 96 provided on the second case member 26 to have an axis parallel to the axis of the rotating shaft 92, and a roller 98 pivotally supported by a tip of the arm 97 so as to engage with one of the notches 94, 94 .... A torsion spring 99 is provided between the base end portion of the arm 98 and the second case member 26. The arm 97 is biased toward the center of turn of the turning member 93 by the spring force exerted by the torsion spring 99 so that the roller 98 may be engaged with one of the notches 94, 94 ....

Moreover, a shift spindle 100 having an axis parallel to the rotating shaft 92 is rotatably supported on the second case member 26 and the right cover member 28 through ball bearings 101 and 102. The base end portion of the shift arm 86 is fixed to the shift spindle 100. The shift arm 86 swings in response to the turning of the shift spindle 100.

Moreover, the base end portion of the shift arm 86 is provided with an arm 103 extending in the radial direction of the shift spindle 100 to be integral with the shift arm 86. The arm 103 has a long opening 104 which is long in a direction perpendicular to the longitudinal direction of the arm 103. A protruding portion 105 located on a straight line connecting the center of the long opening 104 in the circumferential direction and the axis of the shift spindle 100 is provided at a tip portion of the arm in a protruding manner.

On the other hand, two end portions of a pin 106 inserted through the long opening 104 are supported on the second case member 26 and the right cover member 28. A pinching spring 107 having at two opposite ends a pair of pinching arms 107a and 107a for pinching the protruding portion 105 and the pin 106 from two opposite sides is disposed between a part including the shift arm 86 and the arm 103 and the second case member 26 to surround the shift spindle 100. Accordingly, the shift arm 86 and the arm 103 are biased toward reference positions for which the protruding portion 105 and the pin 106 are on the straight line connecting the center of the long opening 104 in the circumferential direction and the axis of the shift spindle 100.

The turning member 93 is formed in the shape of a cup. An engaging pin 109 provided in a shifter 108 disposed in the turning member 93 and turnably supported by the rotating shaft 92 is engaged with a long opening-shaped engaging hole 110 provided in the shift arm 86. Thus, the swing of the shift arm 86 causes the shifter 108 to turn about the axis of the rotating shaft 92.

A conventionally known pawl ratchet mechanism 110 is provided between the shifter 108 and the turning member 93. The pawl ratchet mechanism 110 converts one complete cycle of swing of the shift arm 86 from the reference position to a turn of a predetermined angle of each of the turning member 103 and the transmission drive gear 88.

The shift motor 85 is attached to the right cover member 28 to have an axis of rotation parallel to the shift spindle 100.

The reduction gear mechanism 87 includes a drive gear 112 provided integrally with a motor shaft 85a of the shift motor 85, a first intermediate gear 116 provided integrally with a first intermediate shaft 115 rotatably supported on the second case member 26 and the right cover member 28 through ball bearings 113 and 114 to be meshed with the drive gear 112, a second intermediate gear 118 supported by the first intermediate shaft 115 in a relatively rotatable manner with a torque limiter 117 interposed between the first intermediate shaft 115 and the second intermediate gear 118, a third intermediate gear 122 in the form of a sector gear provided integrally with a second intermediate shaft 121 rotatably supported on the second case member 26 and the right cover member 28 through ball bearings 119 and 120 to be meshed with the second intermediate gear 118, a fourth intermediate gear 123 provided integrally with the second intermediate shaft 121, and a driven sector gear 124 fixed to the shift spindle 100 to be meshed with the fourth intermediate gear 123.

As described above, the gear shift actuator 84 has the motor shaft 85a, the rotating shaft 92, the support shaft 96, the shift spindle 100, the first intermediate shaft 115, and the second intermediate shaft 121. As clearly shown in Fig. 2, the plural shafts 85a, 92, 96, 100, 115, and 121 and the main shaft 41 are disposed at positions overlapping the drive motor 20 to extend in directions along the axis of the drive motor 20.

A shift spindle rotary position sensor 125 for sensing rotary positions of the shift arm 86 and the shift spindle 100 is attached to the right cover member 28 to be coaxially coupled to the shift spindle 100. Moreover, as shown in Fig. 3, a shift drum rotary position sensor 126 for sensing the shift drum 75 is also attached to the right cover member 28. A gear 128 provided on a sensing shaft 127 of the shift drum rotary position sensor 126 is meshed with the transmission driven gear 89.

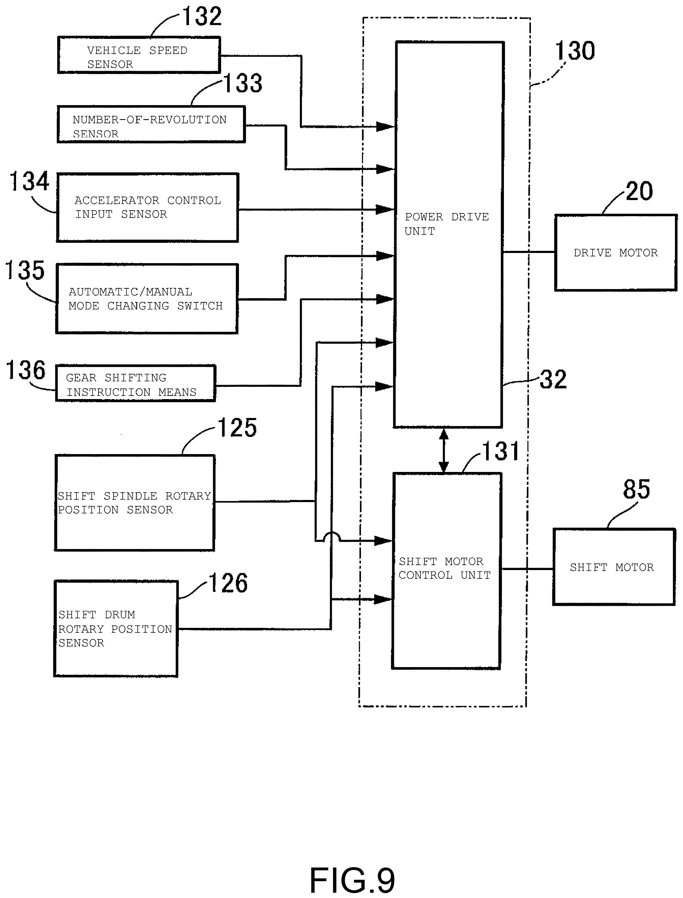

Referring to Fig. 9, the operations of the drive motor 20 and the shift motor 85 are controlled by a controller 130. The controller 130 includes the power drive unit 32 for controlling the drive motor 20, and a shift motor control unit 131 which controls the operation of the shift motor 85 and can send/receive a signal to/from the power drive unit 32. A vehicle speed sensor 132, a number-of-revolution sensor 133 for sensing the number of revolutions of the drive motor 20, an accelerator control input sensor 134, an automatic/manual mode changing switch 135, and gear shifting instruction means 136 operated by an operator in a manual mode are connected to the power drive unit 32. The shift spindle rotary position sensor 125 and the shift drum rotary position sensor 126 are connected to the power drive unit 32 and the shift motor control unit 131.

When the operator selects the manual mode using the automatic/manual mode changing switch 135, the shift motor control unit 131 controls the operation of the shift motor 85 according to gear shifting instructions inputted using the gear shifting instruction means 136. This causes the shift arm 86 to swing, thereby establishing one of the first- to third-speed gear trains G1 to G3.

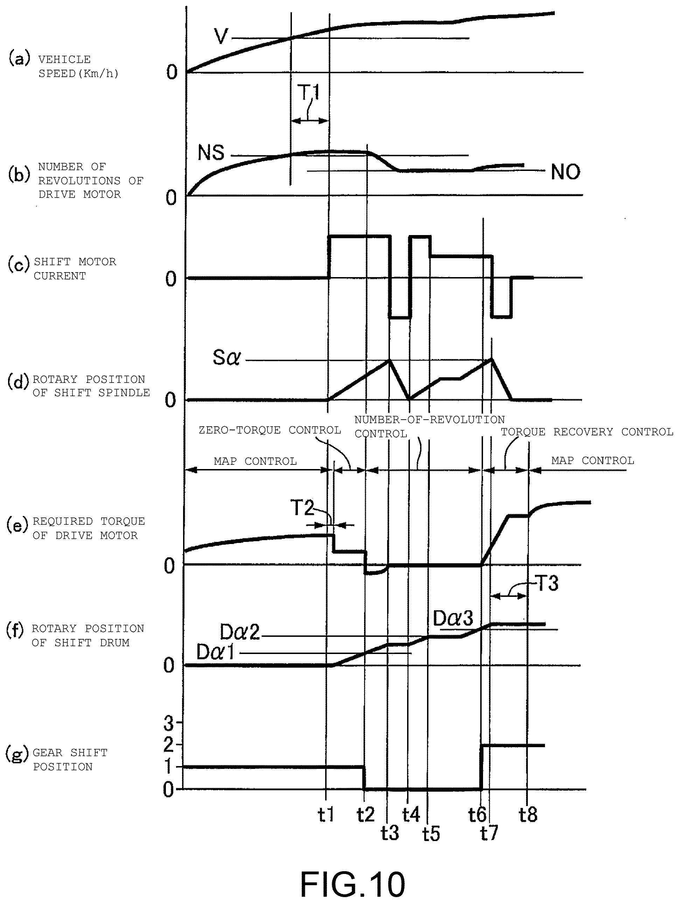

Moreover, when the operator selects an automatic mode using the automatic/manual mode changing switch 135, the controller 130 controls the operations of the drive motor 20 and the shift motor 85 based on detected values of the vehicle speed sensor 132, the number-of-revolution sensor 133, the accelerator control input sensor 134, the shift spindle rotary position sensor 125, and the shift drum rotary position sensor 126 by executing first to eighth steps. This operation control during automatic gear shifting will be described with reference to Fig. 10 showing changes in the number of revolutions of the drive motor 20, a current flowing through the shift motor 85, the rotary position of the shift spindle 100, a required torque of the drive motor 20, the rotary position of the shift drum, and a gear shift position during automatic gear shifting from the first speed to the second speed.

In the case of automatic gear shifting, in the first step, the controller 130 starts the operation of the shift motor 85 at time t1 to cause the shift spindle 100 to turn from the reference position, in response to a continuous deviation (exceeding for shifting up) of the number of revolutions of the drive motor 20 from a set number of revolutions NS for a predetermined time T1 on condition that the vehicle speed is not less than a predetermined speed V. Further, the controller 130 cuts off a load on the drive motor 20 a predetermined time T2 after the start of the operation of the shift motor 85. In other words, the drive motor 20 shifts from a map-controlled state based on a map to zero-torque control. Thus, the torque of the drive motor 20 decreases.

Next, in the second step, at time t2 at which it is confirmed based on the detection of turning of the shift drum 76 exceeding a set angle Dα1 that the shift drum 75 has turned until the slide shaft 72 has entered a neutral region (in the case of shifting from the first speed to the second speed, the first neutral region N1), a shift is made from zero torque control to number-of-revolution control so that the number of revolutions of the drive motor 20 may match with a target number of revolutions NO set based on detected values of the number-of-revolution sensor 133 and the accelerator control input sensor 134.

In the third step, at time t3 at which it is confirmed that the amount of turning of the shift spindle 100 has reached a set turning amount Sα in a state in which the slide shaft 72 is in the neutral region, the shift motor 85 is operated so that the shift spindle 100 may return to the reference position while the slide shaft 72 is maintained in the neutral region. In other words, in the case where the shift motor 85 has been rotated forward in the first step to turn the shift spindle 100 from the reference position, the shift motor 85 is rotated reversely at time t3. At this time, since the shift drum 100 and the shift arm 86 are biased toward the reference positions by the pinching spring 107, the shift spindle 100 can be quickly returned to the reference position by the rotation of the shift motor 85 and the biasing force of the pinching spring 107.

In the fourth step, after it is confirmed that the shift spindle 100 has returned to the reference position, at time t4 corresponding to the confirmation of a state in which the number of revolutions of the drive motor 20 is the target number of revolutions, the shift motor 85 is operated to drive the slide shaft 72 toward a desired transmission region (in the case of shifting from the first speed to the second speed, the second transmission region A2).

In the fifth step, at time t5 at which it is confirmed based on the detection of turning of the shift drum 76 exceeding a set angle Dα2 that the shift drum 75 has turned to such a rotary position that the engaging portion 73 comes into contact with the desired locking portions (in the case of shifting from the first speed to the second speed, the locking portions 47a ...) among the plural locking portions 46a to 48a, control is started in which the operating speed of the shift motor 85 is reduced to reduce the travel speed of the slide shaft 72. At this time, the operating speed of the shift motor 85 is reduced by at least one of braking and duty control.

In the sixth step, at time t6 at which it is confirmed based on the detection of turning of the shift drum 76 exceeding a set angle Dα3 that the shift drum 75 has turned to such a rotary position that the engaging portion 73 engages with the desired locking portions, a shift is made to torque recovery control in which the load on the drive motor 20 is recovered to a load before the start of the first step and maintained.

In the seventh step, at time t7 at which it is confirmed that the amount of turning of the shift spindle 100 has reached a set turning amount Sα, the shift motor 85 is operated so that the shift spindle 100 may return to the reference position.

Further, in the eighth step, at time t8 a predetermined time T3 after the time t7, the control of the torque of the drive motor 20 is shifted from torque recovery control to map control.

In the case of shifting up from the second speed to the third speed or shifting down, automatic gear shifting control is basically the same as described above.

Next, effects of this embodiment will be described. The first- to third-speed drive gears 43, 44, and 45 each provided in a relatively non-rotatable manner on the main shaft 41 to which the output power of the drive motor 20 is transmitted are respectively meshed with the first- to third-speed driven gears 46, 47, and 48 each supported by the cylindrical gear supporting portion 42a of the countershaft 42 in a relatively rotatable manner. The slide shaft 72 capable of selectively engaging with one of the first- to third-speed driven gears 46 to 48 is axially movably inserted in the gear supporting portion 42a in a manner non-rotatable relative to the countershaft 42. Since the shift drum 75 for axially driving the slide shaft 72 is disposed to coaxially surround the slide shaft 72, a space for disposing the shaft driving member does not need to be ensured at the side of an end portion of the slide shaft 72. Further, since the installation directions of the slide shaft 72 and the shift drum 75 are the same, the slide shaft 72 can be driven with a compact and easy-to-install structure.

Moreover, the guide pin 81 protruding from the slide shaft 72 in a direction perpendicular to the axis of the countershaft 42 is provided in the slide shaft 72, and the shift drum 75 which axially displaces the slide shaft 72 along with the turning of the shift drum 75 itself about the axis thereof is provided with the guide holes 82 into which the guide pin 81 is fitted. Accordingly, a space for disposing the shift drum 75 does not need to be ensured other than those for the main shaft 41 and the countershaft 42. Thus, the main shaft 41, the countershaft 42, and the shift drum 75 can be disposed together into a compact arrangement.

Moreover, the transmission drive gear 88 configured to turn according to the shift arm 86 which swings in response to a gear shifting operation by an operator and which also swings during automatic gear shifting is meshed with the transmission driven gear 89 provided on the outer periphery of the shift drum 75. Accordingly, the shift drum 75 can be turned using a shift drum driving mechanism similar to conventional ones such that the swing of the shift arm 86 is transmitted to the shift drum 75 through the transmission drive gear 88 and the transmission driven gear 89 meshed with each other.

Moreover, within the case 24 supporting the drive motor 20, the power transmission chamber 30 which houses the first- to third-speed drive gears 43 to 45 and the first- to third-speed driven gears 46 to 48 and the gear shifting chamber 31 which houses the shift arm 86, the transmission drive gear 88, and the transmission driven gear 89 are formed. Further, the shift drum 75 is disposed to extend from the power transmission chamber 30 and the gear shifting chamber 31. Accordingly, the whole of the case 24 can be made compact while the power transmission chamber 30 and the gear shifting chamber 31 are separated from each other.

Moreover, the rotary positions of the shift spindle 100 and the shift arm 86 are sensed by the shift spindle rotary position sensor 125, and the rotary position of the shift drum 75 is sensed by the shift drum rotary position sensor 126. Accordingly, automatic gear shifting can be performed such that the start of a gear shifting operation and the completion of the operation are respectively sensed by the shift spindle rotary position sensor 125 and the shift drum rotary position sensor 126.

Moreover, the drive motor 20 is housed in and fixed to the motor chamber 29 formed adjacent to the power transmission chamber 30 within the case 24. Further, the main shaft 41 and the plural shafts 85a, 92, 96, 100, 115, and 121 of the gear shift actuator 84 for turning the shift drum 75 are disposed at positions overlapping the drive motor 20 when seen in directions along the axis of the drive motor 20. Accordingly, the drive motor 20, the main shaft 41, and the gear shift actuator 84 can be disposed in a compact arrangement.

Moreover, the right rear wheel WRR to which the power of the countershaft 42 is transmitted is disposed to the right of and outside the gear shifting chamber 31. The brake panel 67 as part of the drum brake BR disposed in the wheel 66R of the right rear wheel WRR to be capable of braking the right rear wheel WRR is supported by the tip portion of the protruding portion 28b protruding from the right cover member 28 of the case 24 toward the right rear wheel WRR. The closed-bottom fitting hole 77 into which the end portion of the slide shaft 72 on the gear shifting chamber 31 side is slidably fitted is formed in part of the protruding portion 28b. Thus, it is unnecessary to provide a portion for supporting the end portion of the slide shaft 72 on the gear shifting chamber 31 side separately from the protruding portion 28b, and the case 24 can be made compact.

Moreover, the pawl 73 which selectively engages with the locking portions 46a, 47a, or 48a of the first, second, or third driven gear 46, 47, or 48 is provided on the slide shaft 72. The axial travel range of the slide shaft 72 has the first to third transmission regions A1 to A3, each of which is set so that the pawl 73 may be selectively engaged with the corresponding set of the locking portions 46a, 47a, or 48a, and the first and second neutral regions N1 and N2, which are set between the first to third transmission regions A1 to A3 so that the pawl 73 may not be engaged with either of the locking portions 46a, 47a, or 48a. In the first to fourth steps for automatic gear shifting, the controller 130 configured to control the operations of the drive motor 20 and the shift motor 85, starts the operation of the shift motor 85 to turn the shift spindle 100 from the reference position, and cuts off the load on the drive motor 20; adjusts the number of revolutions of the drive motor 20 to the target number of revolutions in response to the movement of the slide shaft 72 to a neutral region; then moves the shift spindle 100 back to the reference position with the slide shaft 72 maintained in the neutral region; and moves the slide shaft 72 to the desired transmission region in a state in which the shift spindle 100 is returned to the reference position when the number of revolutions of the drive motor 20 is the target number of revolutions. Thus, smooth automatic gear shifting can be performed by stopping the slide shaft 72 in the neutral region once while controlling the torque of the drive motor 20, without a clutch provided between the drive motor 20 as a drive source and the main shaft 41.

Moreover, in the fifth and sixth steps subsequent to the fourth step, in connection with moving the slide shaft 72 from the neutral region, the controller 130 reduces a gear shifting jolt by reducing the travel speed of the slide shaft 72 when the pawl 73 comes into contact with the desired locking portions among the locking portions 46a to 48a, and recovers the load on the drive motor 20 in response to the engagement of the pawl 73 with the desired locking portions. Accordingly, smooth automatic shifting can be performed.

Further, in the first step, the load on the drive motor 20 is cut off a predetermined time T2 after the start of the operation of the shift motor 85. Accordingly, automatic gear shifting can be performed without impairing the drive feel of the vehicle.

While an embodiment of the present invention has been described above, the present invention is not limited to the above-described embodiment, but various design modifications can be made thereto without departing from the invention defined by the claims.

### Main reference numerals

- 20: DRIVE MOTOR AS DRIVE SOURCE
- 21: TRANSMISSION
- 24: CASE
- 28b: PROTRUDING PORTION
- 29: MOTOR CHAMBER
- 30: POWER TRANSMISSION CHAMBER
- 31: GEAR SHIFTING CHAMBER
- 41: MAIN SHAFT
- 42: COUNTERSHAFT
- 42a: GEAR SUPPORTING PORTION
- 43, 44, 45: DRIVE GEAR
- 46, 47, 48: DRIVEN GEAR
- 72: SLIDE SHAFT
- 75: SHIFT DRUM AS SHAFT DRIVING MEMBER
- 77: FITTING HOLE
- 81: GUIDE PIN
- 82: GUIDE HOLE
- 85a, 92, 96, 100, 115, 121: SHAFT
- 86: SHIFT ARM
- 88: TRANSMISSION DRIVE GEAR
- 89: TRANSMISSION DRIVEN GEAR
- 125: SHIFT SPINDLE ROTARY POSITION SENSOR AS FIRST SENSOR
- 126: SHIFT DRUM ROTARY POSITION SENSOR AS SECOND SENSOR
- BR: DRUM BRAKE AS BRAKING DEVICE
- WRR: RIGHT REAR WHEEL AS DRIVE WHEEL

## Claims

1. A transmission comprising:
a main shaft (41) configured to receive power transmitted from a drive source (20);
a plurality of drive gears (43, 44, and 45) each provided on the main shaft (41) in a relatively non-rotatable manner;
a countershaft (42) having an axis parallel to the main shaft (41) and including a cylindrical gear supporting portion (42a);
a plurality of driven gears (46, 47, and 48) each supported by the gear supporting portion (42a) in a relatively rotatable manner and respectively meshed with the plurality of drive gears (43 to 45);
a slide shaft (72) being axially movably inserted in the gear supporting portion (42a) in a manner non-rotatable relative to the countershaft (42) and being capable of selectively engaging with one of the plurality of driven gears (46, 47, and 48); and
a shaft driving member (75) disposed to coaxially surround the slide shaft (72) and configured to axially drive the slide shaft (72);
and further comprising:
a guide pin (81) provided in the slide shaft (72), the guide pin (81) protruding from the slide shaft (72) in a direction perpendicular to the axis of the countershaft (42), wherein the shaft driving member is a shift drum (75) having a guide hole (82) into which the guide pin (81) is fitted by axially displacing the slide shaft (72) in response to turning of the shift drum (75) about an axis thereof;
the transmission being **characterized by** further comprising:
a shift arm (86) configured to swing in response to at least a gear shifting operation by an operator;
a transmission drive gear (88) configured to turn in response to swing of the shift arm (86);
a transmission driven gear (89) provided on an outer periphery of the shaft driving member (75) to be meshed with the transmission drive gear (88);
a case (24) which supports the drive source (20) and in which a power transmission chamber (30) housing the drive gears (43 to 45) and the driven gears (46 to 48) and a gear shifting chamber (31) housing the shift arm (86), the transmission drive gear (88), and the transmission driven gear (89) are formed; wherein the shift drum (75) is disposed to extend from the power transmission chamber (30) to the gear shifting chamber (31);
a drive wheel (WRR) disposed outside the gear shifting chamber (31) and configured to receive power transmitted from the countershaft (42); and
a braking device (BR) disposed in a wheel (66R) of the drive wheel (WRR) to be capable of braking the drive wheel (WRR), part of the braking device (BR) being supported by a tip portion of a protruding portion (28b) protruding from the case (24) toward the drive wheel (WRR),
wherein a closed-bottom fitting hole (77) is formed in part of the protruding portion (28b), and
an end portion of the slide shaft (72) on a gear shifting chamber (31) side is slidably fitted into the fitting hole (77).

2. The transmission according to claim 1, further comprising:
a first sensor (125) configured to sense a rotary position of the shift arm (86); and
a second sensor (126) configured to sense a rotary position of the shift drum (75).

3. The transmission according to claim 1, wherein the drive source is a drive motor (20) housed in and fixed to a motor chamber (29) formed adjacent to the power transmission chamber (30) within the case (24), and
the main shaft (41) and a plurality of shafts (85a, 92, 96, 100, 115, and 121) of a gear shift actuator (84) configured to turn the shift drum (75) are disposed at positions overlapping the drive motor (20) when seen in a direction along an axis of the drive motor (20).

## Patentansprüche

1. Getriebe, umfassend:
eine Hauptwelle (41), die so ausgestaltet ist, dass sie von einer Antriebsquelle (20) übertragene Leistung aufnimmt;
eine Mehrzahl von antreibenden Zahnrädern (43, 44 und 45), die jeweils auf relativ nicht-drehbare Weise an der Hauptwelle (41) vorgesehen sind;
eine Gegenwelle (42), die eine parallel zur Hauptwelle (41) liegende Achse aufweist und einen zylindrischen Zahnradabstützbereich (42a) aufweist;
eine Mehrzahl von getriebenen Zahnrädern (46, 47 und 48), die jeweils auf relativ nicht-drehbare Weise von dem Zahnradabstützbereich (42a) getragen sind und entsprechend mit der Mehrzahl der antreibenden Zahnräder (43 bis 45) kämmend in Eingriff stehen;
eine Gleitwelle (72), die axial beweglich bezüglich der Gegenwelle (42) nichtdrehbar in den Zahnradabstützbereich (42a) eingeführt ist und die selektiv mit einem aus der
Mehrzahl der getriebenen Zahnräder (46, 47 und 48) in Eingriff bringbar ist; und
ein Wellenantriebsteil (75), das so angeordnet ist, dass es die Gleitwelle (72) koaxial umgibt und das dazu ausgelegt ist, die Gleitwelle (72) axial anzutreiben;
und weiterhin umfassend:
einen in der Gleitwelle (72) vorgesehenen Führungsstift (81), wobei der Führungsstift (81) in einer Richtung senkrecht zu der Achse der Gegenwelle (42) aus der Gleitwelle (72) herausragt, wobei das Wellenantriebsteil eine Schalttrommel (75) mit einem Führungsloch (82) ist, in das der Führungsstift (81) eingepasst wird, indem die Gleitwelle (72) infolge eines Drehens der Schalttrommel (75) um eine Achse derselben axial verschoben wird;
wobei das Getriebe **dadurch gekennzeichnet ist, dass** es ferner umfasst:
einen Schaltarm (86), der dazu ausgelegt ist, dass er infolge mindestens eines Schaltvorgangs eines Bedieners verschwenkt wird;
ein Getriebeantriebsrad (88), das dazu ausgelegt ist, sich infolge eines Verschwenkens des Schaltarms (86) zu drehen;
ein Getriebeabtriebsrad (89), das an einem äußeren Rand des Wellenantriebsteils (75) angeordnet ist, um kämmend in das Getriebeantriebsrad (88) einzugreifen;
ein Gehäuse (24), welches die Antriebsquelle (20) trägt und in welchem eine die antreibenden Zahnräder (43 bis 45) und die angetriebenen Zahnräder (46 bis 48) aufnehmende Kraftübertragungskammer (30) sowie eine den Schaltarm (86), das Getriebeantriebsrad (88) und das Getriebeabtriebsrad (89) aufnehmende Getriebeschaltkammer (31) gebildet sind;
wobei die Schalttrommel (75) dazu ausgelegt ist, dass sie sich von der Kraftübertragungskammer (30) zu der Getriebeschaltkammer (31) erstreckt;
ein Antriebsrad (WRR), das außerhalb der Getriebeschaltkammer (31) angeordnet ist und das dazu ausgelegt ist, von der Gleitwelle (42) übertragene Leistung aufzunehmen; und
eine Bremsvorrichtung (BR), die in einem Rad (66R) des Antriebsrads (WRR) angeordnet ist und dazu in der Lage ist, das Antriebsrad (WRR) zu bremsen, wobei ein Teil der Bremsvorrichtung (BR) von einem Spitzenabschnitt eines vorspringenden Bereichs (28b), der von dem Gehäuse (24) zu dem Antriebsrad (WRR) vorspringt, getragen wird,
wobei ein bodenseitig geschlossenes Passloch (77) in einem Teil des vorspringenden Bereichs (28b) ausgebildet ist, und
ein Endbereich der Gleitwelle (72) auf einer Seite der Getriebeschaltkammer (31) verschiebbar in das Passloch (77) eingepasst ist.

2. Getriebe nach Anspruch 1, weiter aufweisend:
einen ersten Sensor (125), der dazu ausgebildet ist, eine Drehposition des Schaltarms (86) zu erkennen; und
einen zweiten Sensor (126), der dazu ausgebildet ist, eine Drehposition der Schalttrommel (75) zu erkennen.

3. Getriebe nach Anspruch 1, wobei
die Antriebsquelle ein Antriebsmotor (20) ist, der in einer benachbart zu der Kraftübertragungskammer (30) innerhalb des Gehäuses (24) gebildeten Motorkammer (29) untergebracht und an ihr befestigt ist, und
die Hauptwelle (41) und eine Mehrzahl von Wellen (85a, 92, 96, 100, 115 und 121) eines zur Drehung der Schalttrommel (75) ausgebildeten Schaltungsantriebs (84) an Positionen angeordnet sind, die mit dem Antriebsmotor (20) bei einer Betrachtung entlang der Richtung einer Achse des Antriebsmotors (20) überlappen.

## Revendications

1. Transmission comprenant :
un arbre principal (41) configuré pour recevoir une puissance émise par une source d'entraînement (20) ;
une pluralité de roues dentées d'entraînement (43, 44, et 45) chacune étant fournie sur l'arbre principal (41) d'une manière relativement non rotative ;
un arbre intermédiaire (42) ayant un axe parallèle à l'arbre principal (41) et comprenant une partie de support de roue dentée cylindrique (42a) ;
une pluralité de roues dentées entraînées (46, 47, et 48) chacune étant supportée par la partie de support de roue dentée (42a) d'une manière relativement rotative et respectivement engrenée avec la pluralité de roues dentées d'entraînement (43 à 45) ;
un arbre coulissant (72) étant inséré de manière axialement mobile dans la partie de support de roue dentée (42a) d'une manière non rotative par rapport à l'arbre intermédiaire (42) et étant capable de se mettre en prise de manière sélective avec une de la pluralité de roues dentées entraînées (46, 47, et 48) ; et
un élément d'entraînement d'arbre (75) disposé pour entourer coaxialement l'arbre coulissant (72) et configuré pour entraîner axialement l'arbre coulissant (72) ;
et comprenant en outre :
une broche de guidage (81) fournie dans l'arbre coulissant (72), la broche de guidage (81) faisant saillie de l'arbre coulissant (72) dans une direction perpendiculaire à l'axe de l'arbre intermédiaire (42), dans laquelle l'élément d'entraînement d'arbre est un tambour de changement de vitesse (75) ayant un trou de guidage (82) dans lequel la broche de guidage (81) est ajustée par déplacement axial de l'arbre coulissant (72) en réponse à la rotation du tambour de changement de vitesse (75) autour d'un axe de celui-ci ;
la transmission étant **caractérisée en ce qu'**elle comprend en outre :
un bras de changement (86) configuré pour basculer en réponse à au moins une opération de changement de vitesse par un opérateur ;
une roue dentée d'entraînement de transmission (88) configurée pour tourner en réponse à un basculement du bras de changement (86) ;
une roue dentée entraînée de transmission (89) fournie sur une périphérie extérieure de l'élément d'entraînement d'arbre (75) pour être engrenée avec la roue dentée d'entraînement de transmission (88) ;
un carter (24) qui supporte la source d'entraînement (20) et dans lequel une chambre de transmission de puissance (30) logeant les roues dentées d'entraînement (43 à 45) et les roues dentées entraînées (46 à 48) et une chambre de changement de vitesse (31) logeant le bras de changement (86), la roue dentée d'entraînement de transmission (88) et la roue dentée entraînée de transmission (89) sont formés ;
dans laquelle le tambour de changement de vitesse (75) est disposé pour s'étendre de la chambre de transmission de puissance (30) à la chambre de changement de vitesse (31) ;
une roue d'entraînement (WRR) disposée à l'extérieur de la chambre de changement de vitesse (31) et configurée pour recevoir une puissance émise par l'arbre intermédiaire (42) ; et
un dispositif de freinage (BR) disposé dans une roue (66R) de la roue d'entraînement (WRR) pour être capable de freiner la roue d'entraînement (WRR), une partie du dispositif de freinage (BR) étant supportée par une partie de pointe d'une partie en saillie (28b) faisant saillie du carter (24) vers la roue d'entraînement (WRR),
dans laquelle un trou d'ajustement inférieur fermé (77) est formé dans une partie de la partie en saillie (28b), et
une partie d'extrémité de l'arbre coulissant (72) sur un côté de chambre de changement de vitesse (31) est ajustée de manière coulissante dans le trou d'ajustement (77).

2. Transmission selon la revendication 1, comprenant en outre :
un premier capteur (125) configuré pour détecter une position rotative de l'arbre de changement (86) ; et
un deuxième capteur (126) configuré pour détecter une position rotative du tambour de changement de vitesse (75).

3. Transmission selon la revendication 1, dans laquelle la source d'entraînement est un moteur d'entraînement (20) logé dans et fixé à une chambre de moteur (29) formée de manière adjacente à la chambre de transmission de puissance (30) à l'intérieur du carter (24), et
l'arbre principal (41) et une pluralité d'arbres (85a, 92, 96, 100, 115, et 121) d'un actionneur de changement de vitesse (84) configurés pour faire tourner le tambour de changement de vitesse (75) sont disposés à des positions chevauchant le moteur d'entraînement (20) lorsque vu dans une direction le long d'un axe du moteur d'entraînement (20).
